# FASCICULE DE BREVET EUROPEEN

(11) **EP 1 459 818 B1**
(45) Date de publication et mention de la délivrance du brevet: **16.08.2006**
(21) Numéro de dépôt: 04290742.8
(22) Date de dépôt: 19.03.2004
(51) Int. Cl.: B21D 26/02

(54) **Ensemble permettant la fabrication d'une pièce mécanique creuse par soudage-diffusion et formage superplastique, utilisation d'un tel ensemble et procédé de fabrication d'une telle pièce mécanique**
Einrichtung zum Herstellen eines hohlen metallischen Elementes durch Diffusionsverbindung und superplastische Verformung, Verwendung derselben sowie Verfahren zum Herstellen eines solchen metallischen Elementes
Assembly for manufacturing a hollow metallic workpiece by diffusion bonding and superplastic forming, use thereof and method of manufacturing of such a metallic workpiece

(30) Priorité: 21.03.2003 FR 0303476
(43) Date de publication de la demande: 22.09.2004
(73) Titulaire: SNECMA, 75015 Paris (FR)
(72) Inventeur: Franchet, Jean-Michel, 75018 Paris (FR); Gesmier, Patrick, 95110 Sannois (FR)
(74) Mandataire: Cardy, Sophie Marie

(56) Documents cités:
- FR-A- 2 754 478
- US-A- 5 273 202
- US-A- 5 484 977
- US-A1- 2001 022 023

## Description

L'invention concerne un ensemble permettant la fabrication d'une pièce mécanique creuse par soudage-diffusion et formage superplastique selon le preamble de la revendication 1 (voir par exemple FR-A-2 754 478), l'utilisation d'un tel ensemble selon la revendication 6 et un procédé de fabrication d'une pièce mécanique creuse par soudage-diffusion et formage superplastique, tel que défini dans la revendication 7.

Plus précisément, la présente invention se rapporte à l'amélioration des conditions dans lesquelles est réalisée l'étape de soudage-diffusion et en particulier la présente invention vise à contribuer à l'élimination, avant mise à la température de soudage-diffusion, de toute source de contamination des surfaces à assembler, notamment des résidus de la dégradation du produit anti-diffusion formant une barrière de diffusion et encore appelé « stop-off ».

On rappelle que la technique de soudage-diffusion consiste à mettre en contact à haute température, sous une certaine pression et pendant un certain temps, deux surfaces d'un matériau donné. Le soudage des deux surfaces s'opère alors par diffusion d'atomes, ce qui présente l'avantage de former une structure de liaison équivalente à la structure de base du matériau.

Bien évidemment, la qualité de la soudure dépend des paramètres opératoires : température, pression et temps mais aussi des paramètres liés aux éléments à assembler, généralement sous forme de plaques :structure métallurgique, état de surface (propreté, rugosité). En conséquence, il est primordial d'éliminer toute source de contamination des surfaces à assembler avant la mise en température de l'étape de soudage-diffusion.

Ce nettoyage des surfaces est réalisé classiquement par une mise sous vide de la cavité formée par les deux surfaces à souder. Cependant dans le cas d'un soudage-diffusion associé à un formage superplastique, on utilise un produit anti-diffusion ou « stop-off » pour empêcher le soudage-diffusion dans les zones des surfaces en regard qui seront ultérieurement gonflées pour l'obtention d'une pièce mécanique creuse.

Ce type de produit est composé d'un liant, généralement organique, et d'une poudre d'un matériau anti-diffusion tel qu'un matériau réfractaire comme une céramique (par exemple oxyde d'yttrium ou alumine, ou encore nitrure de bore), ou graphite.

Après application du produit anti-diffusion selon un motif prédéfini correspondant aux zones des surfaces à ne pas relier par soudage-diffusion, le liant est dégradé pour ne conserver que la poudre du produit anti-diffusion, laquelle est formée de particules qui présentent les propriétés anti-adhésion en inhibant la diffusion des atomes des matériaux des plaques à souder.

Lors de cette dégradation du liant par mise à une température située généralement entre 200 et 400 °C, se forment des résidus, en particulier gazeux, qui peuvent, à des degrés divers en fonction de leur composition chimique, contaminer les surfaces à souder.

Ainsi, on comprend qu'il est indispensable d'éliminer également les résidus de dégradation du produit anti-diffusion ou « stop-off ».

Il faut noter que la résistance mécanique du produit anti-diffusion est fortement réduite, après cette dégradation, de sorte qu'il convient d'éviter de manipuler et/ou de déplacer des parties à souder ou encore de créer des perturbations à l'intérieur de la cavité, ce qui pourrait provoquer une dissémination des particules de la poudre anti-diffusion sur des zones des surfaces à souder devant être raccordées par soudage-diffusion.

Classiquement, ces résidus de dégradation sont réduits par mise sous vide partiel de la cavité formée par les deux surfaces à souder.

Il a aussi été proposé de faire circuler un gaz neutre, tel que l'argon, dans cette cavité, puis de réaliser une étape de mise sous vide partiel de cette cavité avant l'étape de soudage diffusion proprement dite (FR2754478).

Cette solution est relativement lourde à mettre en oeuvre puisqu'il est nécessaire de mettre en place un ensemble de tubes et de raccords pour la circulation de gaz neutre et la mise sous vide ultérieure, cet ensemble constituant par ailleurs une source de fuites éventuelles et rendant plus complexe la réalisation de l'opération de soudage-diffusion. En outre, cette solution permet le traitement d'une seule pièce à la fois et la mise sous vide allonge le temps de fabrication.

De plus, il faut noter que lorsque les liants se volatilisent, la tenue mécanique du produit anti-diffusion se dégrade fortement de sorte que le flux du gaz neutre circulant dans la cavité peut entraîner une dissémination locale de particules anti-diffusion sur les surfaces à souder.

Enfin, il faut noter que malgré la mise sous vide partiel dans la cavité en fin de dégradation, le risque de conserver du gaz neutre emprisonné dans certains zones de la cavité n'est pas nul, ces poches de gaz résiduelles pouvant empêcher localement le soudage-diffusion.

Egalement, selon US 5 484 977 et US 5 273 202, est proposée une élimination des résidus de dégradation du liant des produits anti-diffusion par le fait que l'ensemble est placé dans une chambre placée sous vide partiel en dynamique, c'est-à-dire avec aspiration en continu pour évacuer les gaz issus de la dégradation du liant.

Là encore, il est difficile de traiter plusieurs pièces en même temps du fait des volumes à mettre sous vide partiel, le temps de traitement est long et il est nécessaire de mettre en place une chambre à vide de grandes dimensions, ce qui est lourd à mettre en oeuvre.

La présente invention a pour objectif de fournir un ensemble permettant la fabrication d'une pièce mécanique creuse par soudage-diffusion et formage superplastique, qui ne présente pas les inconvénients de l'art antérieur mais qui réalise de manière satisfaisante l'évacuation des résidus gazeux provenant de la dégradation des produits anti-diffusion ou « stop-off », avant l'étape de soudage-diffusion.

A cet effet, selon la présente invention est proposé un ensemble permettant la fabrication d'une pièce mécanique creuse par soudage-diffusion et formage superplastique, qui comprend :
- un empilement d'au moins deux pièces primaires, lesdites pièces primaires étant assemblées à leur périphérie à l'exception d'un emplacement formant un passage de manière à définir entre elles deux à deux une cavité, et lesdites pièces primaires ayant au moins une face en regard de ladite cavité qui est recouverte, selon un motif, d'un produit anti-diffusion contenant un liant susceptible d'être dégradé thermiquement, caractérisé par:
   - un réservoir étanche présentant un espace interne et une extrémité ouverte, ladite extrémité étant raccordée de manière étanche audit passage dudit empilement afin de permettre une communication entre ledit espace interne dudit réservoir et ladite cavité, le réservoir étant placé sous vide partiel, étant réalisé de manière à être indéformable à la température et à la pression de soudage diffusion dudit empilement, et présentant un volume tel que lorsque ledit ensemble est placé à la température de dégradation thermique dudit liant, les gaz issus de la dégradation du liant sont aspirés dans le réservoir.

De cette manière, on comprend que par la présence du réservoir, de volume adapté pour permettre une aspiration des résidus gazeux, et qui est réalisé dans un matériau pouvant résister, sans se déformer, à de fortes températures et de fortes pressions, on réalise l'évacuation des résidus gazeux issus de la dégradation du liant du produit anti- diffusion directement lors d'une montée en température pouvant correspondre à l'étape précédant la réalisation du soudage-diffusion.

Egalement, on comprend qu'un tel agencement est vraiment facile à mettre en oeuvre du fait qu'il n'y a pas de chambre sous vide extérieure, ni de pompage ou de circulation de gaz à réaliser une fois que le raccordement entre l'empilement et le réservoir a été opéré.

Cette solution présente aussi l'avantage supplémentaire de permettre de réaliser simultanément, en série, l'étape de soudage diffusion de plusieurs empilements/ensembles pour lesquels l'évacuation des résidus gazeux a été réalisée, sans avoir à démonter ou modifier chaque empilement/ensemble.

Globalement, grâce à l'agencement selon la présente invention, il est possible, de manière très simple, de réaliser simultanément avec l'étape de dégradation effectuée en mettant l'empilement sous une température permettant la dégradation du liant, à savoir en général entre 200 et 400°C, l'évacuation des résidus gazeux.

Selon une disposition préférentielle, ledit empilement se caractérise en ce que ladite pièce mécanique est une aube creuse de turbomachine, en particulier une aube de rotor de soufflante, et en ce que ledit empilement comporte trois pièces primaires composées d'une pièce primaire d'extrados, d'une tôle centrale et d'une pièce primaire d'intrados.

En effet, la présente invention est tout particulièrement adaptée à la réalisation d'une pièce mécanique obtenue à partir de trois pièces primaires afin de former une aube creuse de turbomachine, la pièce primaire d'extrados et la pièce primaire d'intrados allant constituer, pour la pièce finale, respectivement la partie supérieure (ou peau d'extrados) et la partie inférieure (ou peau d'intrados) de l'aube, et la tôle centrale allant constituer, pour la pièce finale, une entretoise de renforcement. Cette entretoise de renforcement est disposée entre la partie supérieure et la partie inférieure de l'aube, en étant soudée à ces deux parties aux emplacements des surfaces en regard des trois pièces primaires qui n'ont pas été recouvertes de produit anti- diffusion.

De préférence, ledit réservoir est réalisé dans un alliage métallique à base nickel ou à base cobalt.

Selon une autre disposition préférentielle, ledit volume du réservoir est compris entre 10 et 100 fois le volume de ladite cavité de l'empilement.

De préférence, ledit réservoir est placé sous un vide partiel compris entre 0,01 et 0,1 Pa, de préférence entre 0,03 et 0, 07 Pa, et de manière préférentielle sensiblement égal à 0, 05 Pa (soit entre 1 10⁻⁴ mbar et 10 10⁻⁴ mbar, de préférence entre 3 et 7 10⁻⁴ mbar, et de manière préférentielle sensiblement égal à 5 10⁻⁴ mbar)

Un tel dimensionnement allié à ces niveaux de pression garantit en effet l'aspiration complète des résidus gazeux pendant l'étape de dégradation du liant effectuée à haute température.

La présente invention porte aussi sur l'utilisation d'un tel ensemble pour l'évacuation des résidus gazeux présents dans une cavité séparant au moins deux pièces primaires destinées à être reliées par soudage-diffusion en vue de l'obtention, après formage superplastique, d'une pièce mécanique creuse.

La présente invention porte également sur un procédé de fabrication d'une pièce mécanique creuse par soudage-diffusion et formage superplastique, comprenant les étapes suivantes :
a) fourniture d'au mois deux pièces primaires ;
b) dépôt suivant un motif prédéfini d'un produit anti-diffusion sur au moins une face parmi chaque paire de faces desdites pièces primaires, destinées à venir en regard l'une de l'autre ;
c) fourniture d'un réservoir étanche présentant une extrémité ouverte, étant réalisé de manière à être indéformable à la température et à la pression de soudage diffusion du matériau desdites pièces primaires ;
d) assemblage des pièces primaires à leur périphérie à l'exception d'un emplacement formant un passage, lesdites pièces primaires formant un empilement en délimitant entre elles deux à deux une cavité en communication avec ledit passage ;
e) placement de l'empilement et du réservoir dans un enceinte avec mise sous vide partiel de l'enceinte, ce par quoi le volume interne du réservoir est mis sous vide partiel ;
f) raccordement étanche entre ladite extrémité ouverte du réservoir et ledit passage dudit empilement dans ladite enceinte sous vide partiel, afin de former un ensemble permettant une communication entre ledit espace interne dudit réservoir et ladite cavité ;
g) chauffage de l'enceinte à la température de dégradation thermique dudit liant, de préférence entre 200 et 400°C, ce qui permet aux gaz issus de la dégradation du liant d'être aspirés dans le réservoir ;
h) chauffage de l'enceinte à la température de soudage-diffusion et mise sous pression de l'enceinte à la pression de soudage-diffusion, ce qui entraîne le soudage-diffusion de l'empilement en pression isostatique ;
i) séparation entre le réservoir et l'empilement soudé ;
j) placement dudit empilement soudé dans un moule ;
k) mise à la température de formage superplastique dudit moule et injection sous la pression de formage superplastique d'un gaz inerte par ledit passage dans ladite cavité, ce qui entraîne le gonflement de l'empilement et le formage superplastique permettant l'obtention d'une ébauche de la pièce mécanique.

Selon un mode de réalisation préférentiel, lesdites étapes d) d'assemblage des pièces primaires et f) de raccordement étanche sont effectuées par soudage par faisceau d'électrons.

Selon une autre disposition préférentielle, ledit vide partiel est compris entre 0,01 et 0,1 Pa, de préférence entre 0,03 et 0, 07 Pa, et de manière préférentielle sensiblement égal à 0, 05 Pa (soit entre 1 10⁻⁴ mbar et 10 10⁻⁴ mbar, de préférence entre 3 et 7 10⁻⁴ mbar, et de manière préférentielle sensiblement égal à 5 10⁻⁴ mbar).

Selon une application privilégiée du procédé objet de la présente invention, ladite pièce mécanique est une aube creuse de turbomachine, en particulier une aube de rotor de soufflante, et ledit empilement comporte trois pièces primaires composées d'une pièce primaire d'extrados, d'une tôle centrale et d'une pièce primaire d'intrados.

D'autres avantages et caractéristiques de l'invention ressortiront à la lecture de la description suivante faite à titre d'exemple et en référence aux dessins annexés dans lesquels :
- la figure 1 montre, schématiquement et en coupe longitudinale, un ensemble selon la présente invention
- la figure 2 montre, en perspective, un ensemble selon la présente invention dans son application à une aube de turbomachine, et
- la figure 3 montre de manière partielle et agrandie, la section longitudinale de l'ensemble de la figure 2.

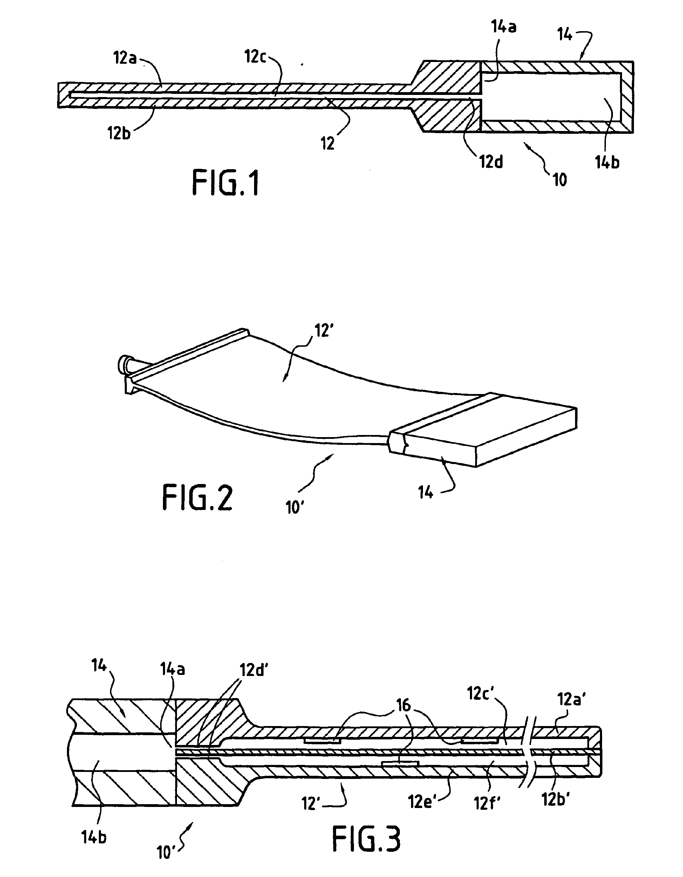

Sur la figure 1 est représenté un ensemble 10 selon la présente invention qui est constitué, à gauche, d'un empilement 12, et à droite, d'un réservoir 14.

Le réservoir 14 est étanche et présente une extrémité ouverte 14a, en définissant un espace interne 14b présentant un volume prédéterminé.

On comprend que ce réservoir 14 doit résister à des pressions à des températures correspondant à celles pratiquées pendant l'étape de soudage-diffusion, c'est-à-dire jusqu'à une température de l'ordre 900 à 1 000°C et une pression de l'ordre de 4 10⁶ Pa, c'est-à-dire 40 bars.

A cet effet, on choisit de réaliser le réservoir 14 dans un matériau adéquat, de préférence dans un alliage métallique à base nickel (par exemple IN100 ou NK15CAT), ou encore à base cobalt (par exemple MAR 509 ou KC24NWTa), c'est-à-dire un alliage à haute résistance.

Ce réservoir 14 peut présenter la forme générale d'un parallélépipède rectangle ou toute autre forme, et il peut également être équipé (cas de figure non illustré) de raidisseurs internes pour mieux résister à la pression à laquelle il sera soumis pendant l'étape de soudage-diffusion.

L'empilement 12 de la figure 1 représente un premier mode de réalisation dans lequel il est constitué d'une première pièce primaire 12a et d'une deuxième pièce primaire 12b, entre lesquelles est délimitée une cavité 12c.

Cet empilement 12 est obtenu après que les pièces primaires 12a et 12b, présentant essentiellement la forme d'une plaque, ont été assemblées le long de leur périphérie afin de délimiter entre elles la cavité 12c.

Plus précisément, lors de cet assemblage, la périphérie des pièces primaires 12a et 12b n'est pas refermée au niveau d'un emplacement destiné à former un passage 12d entre l'extérieur et la cavité 12c.

Comme on le voit sur la figure 1, les pièces primaires 12a et 12b, sont conformées, dans leur partie correspondant au passage 12d, pour qu'un montage étanche puisse être réalisé entre le réservoir 14, au niveau de son extrémité ouverte 14a, et l'empilement 12, au niveau du passage 12d.

Les pièces primaires 12a et 12b sont réalisées dans des matériaux susceptibles d'être formés de manière superplastique, par exemple en titane ou dans un alliage à base de titane ou encore dans un matériau composite à base métallique comprenant du titane.

L'assemblage précité des pièces primaires 12a et 12b, ainsi que l'assemblage entre le réservoir 14 et l'empilement 12 peuvent être réalisés par différents types de soudure. De préférence, on réalise ces deux assemblages par un soudage au laser ou sous faisceau d'électrons.

Ces deux étapes de soudage peuvent être réalisées successivement dans une même enceinte placée sous vide partiel, ceci afin de permettre, après formation de l'ensemble 10, que l'espace interne 14b issu du réservoir 14 soit placé sous vide partiel. Ce vide partiel est de préférence compris entre 0,01 et 0,1 Pa, de préférence entre 0,03 et 0,07 Pa, et préférentiellement à 0,05 Pa (c'est-à-dire entre 1 10⁻⁴ mbar et 10 10⁻⁴ mbar, de préférence entre 3 et 7 10⁻⁴ mbar, préférentiellement 5 10⁻⁴ mbar).

Pour permettre de réaliser l'aspiration des résidus gazeux, le volume de l'espace interne 14b du réservoir 14 est compris entre 10 et 100 fois, de préférence entre 50 fois et 100 fois le volume de ladite cavité 12c de l'empilement 12.

On comprend donc que l'ensemble 10 présente une structure interne dans laquelle la cavité 12c présente un volume beaucoup plus faible que le volume de l'espace interne 14b.

C'est grâce à une telle différence de volume que l'on parvient à aspirer le gaz résiduel issu de la dégradation du produit anti-diffusion : en effet, lorsque l'on porte l'ensemble 10 à une température de dégradation thermique située entre 200 et 400°C, le produit anti-diffusion se décompose par la dégradation du liant qui engendre un résidu gazeux augmentant la pression dans la cavité 12c, cette augmentation de pression étant compensée, au niveau de l'espace interne 14b placé initialement sous vide partiel, par une aspiration du résidu gazeux ainsi formé du fait de l'équilibrage entre les pressions de l'espace interne 14b et de la cavité 12c.

Ces étapes de dégradation thermique du liant et d'aspiration des résidus gazeux dans le réservoir 14 s'effectuant de manière très rapide, il est possible de réaliser de manière très rapprochée et quasiment simultanément l'étape de soudage diffusion.

En effet, après montage de l'ensemble 10 comme indiqué précédemment, ce dernier est placé dans une enceinte de chauffage qui va être soumise à une montée en température, la dégradation thermique ayant lieu lorsque la température a atteint au moins 200°C.

Cette montée en température est poursuivie jusqu'à 900°C puis une pression isostatique de 4 10⁶ Pa, soit 40 bars, est alors exercée pendant environ 3 heures pour réaliser le soudage diffusion entre les pièces primaires 12a et 12b.

De manière connue en soi, les faces en regard des pièces primaires 12a et 12b sont recouvertes, avant l'étape d'assemblage de l'empilement 12, d'un produit anti-diffusion ou « stop-off » (plus précisément, l'une de ces deux faces en regard ou bien les deux faces en regard sont recouvertes du produit anti-diffusion). Ce dépôt est effectué selon un motif prédéfini, par exemple par la technique connue de sérigraphie.

Ainsi, il n'y a pas soudage entre les surfaces en regard des pièces primaires 12a et 12b selon le motif pré-défini qui correspond aux emplacements ne devant pas être soudés ensemble pour permettre de gonflage lors du formage superplastique ultérieur.

On comprend donc que l'élimination des résidus gazeux de la dégradation thermique du produit d'anti-diffusion est réalisée quasi simultanément à l'étape de soudage-diffusion. En tout cas, il n'est pas nécessaire d'effectuer ces deux étapes dans des environnements différents de sorte que l'on encoure pas le risque d'une contamination par les particules anti-diffusion des surfaces des pièces primaires 12a et 12b devant être soudées entre elles lors de l'étape de soudage-diffusion.

De plus, il faut noter que l'étape de soudage-diffusion n'endommageant pas le réservoir, celui-ci étant par ailleurs retiré avant l'étape de formage superplastique, il peut être réutilisé ultérieurement dans un autre ensemble, conjointement avec un autre empilement, pour la formation d'une autre pièce mécanique creuse.

On se reportera maintenant aux figures 2 et 3 montrant un deuxième mode de réalisation d'un ensemble selon l'invention qui correspond à l'application à la réalisation d'une aube creuse.

En effet, notamment dans le cas des aubes de rotor de soufflantes des turboréacteurs à double flux, des aubes à grandes cordes sont utilisées.

De telles aubes doivent répondre à des conditions sévères d'utilisation et posséder notamment des caractéristiques mécaniques suffisantes associées à des propriétés antivibratoires et de résistance aux impacts de corps étrangers.

L'objectif de vitesses suffisantes en bout d'aube a de plus mené à rechercher une réduction des masses, ce but étant notamment atteint par l'utilisation d'aubes creuses.

Sur la figure 2 apparaît un ensemble 10' selon ce deuxième mode de réalisation qui comporte, à droite, le réservoir 14, et à gauche l'empilement 12' destiné à former, après soudage diffusion et formage superplastique une aube creuse.

Comme on le voit de manière plus détaillée sur la coupe partielle de la figure 3, le réservoir 14 (à gauche) est similaire à celui de la figure 1.

Par contre, dans le deuxième mode de réalisation, l'empilement 12' (à droite sur la figure 3) diffère de l'empilement 12 du premier mode de réalisation illustré à la figure 1 en ce qu'il comporte trois pièces primaires 12a', 12b' et 12e'.

Plus précisément, la première pièce primaire 12a' et la troisième pièce primaire 12e' constituent respectivement une pièce primaire d'extrados et une pièce primaire d'intrados, qui sont raccordées au réservoir 14 au niveau d'une zone élargie destinée à forme le pied d'aube.

La deuxième pièce primaire 12b', qui est intercalée entre la première pièce primaire 12a' et la troisième pièce primaire 12e' constitue une tôle centrale, d'épaisseur moins importante qui va former ultérieurement l'entretoise servant de raidisseur d'aube après la déformation superplastique.

Cet empilement 12' délimite une cavité en deux parties comprenant une première cavité 12c', entre la première pièce primaire 12a' et la deuxième pièce primaire 12b', et une deuxième cavité 12f, entre la deuxième pièce primaire 12b' et la troisième pièce primaire 12e'.

Pour que la cavité formée par les première et deuxième cavités 12c' et 12f soit étanche tout en communiquant avec l'espace interne 14b du réservoir 14, comme on peut le voir sur la figure 3, l'agencement suivant est prévu.

La première pièce primaire 12a', la deuxième pièce primaire 12b' et la troisième pièce primaire 12d' sont assemblées de manière étanche le long de leur périphérie (voir en particulier à droite de la figure 3) sauf à un emplacement correspondant au passage 12d' à l'entrée des première et deuxième cavités 12c' et 12f.

Sur cette figure 3 apparaît également à différents emplacements correspondant au motif prédéfini, le produit anti-diffusion 16 qui est ici disposé sur la face interne de la première pièce primaire 12a' et la face interne de la troisième pièce primaire 12e'.

Le principe de l'assemblage de l'ensemble 10' et son utilisation pour l'évacuation des résidus gazeux par dégradation thermique des résidus gazeux présents dans l'empilement 10', sont tout à fait similaires à ce qui est expliqué précédemment en relation avec le premier mode de réalisation de l'ensemble 10.

## Revendications

1. Ensemble (10 ; 10') permettant la fabrication d'une pièce mécanique creuse par soudage-diffusion et formage superplastique, comprenant :
- un empilement (12 ;12') d'au moins deux pièces primaires (12a, 12b ; 12a', 12b', 12e'), lesdites pièces primaires (12a, 12b ; 12a', 12b', 12e') étant assemblées à leur périphérie à l'exception d'un emplacement formant un passage (12d ;12d') de manière à définir entre elles deux à deux une cavité (12c ;12c',12f'), et lesdites pièces primaires (12a, 12b ; 12a', 12b', 12e') ayant au moins une face en regard de ladite cavité (12c ;12c',12f') qui est recouverte, selon un motif, d'un produit anti-diffusion (16) contenant un liant susceptible d'être dégradé thermiquement, **caractérisé par**
- un réservoir (14) étanche présentant un espace interne (14b) et une extrémité ouverte (14a), ladite extrémité (14a) étant raccordée de manière étanche audit passage (12d ;12d') dudit empilement (12 ;12') afin de permettre une communication entre ledit espace interne (14b) dudit réservoir (14) et ladite cavité (12c ;12c',12f'), le réservoir (14) étant placé sous vide partiel, étant réalisé de manière à être indéformable à la température et à la pression de soudage diffusion dudit empilement (12 ;12'), et présentant un volume tel que lorsque ledit ensemble (10 ; 10') est placé à la température de dégradation thermique dudit liant, les gaz issus de la dégradation du liant sont aspirés dans le réservoir (14).

2. Ensemble (10') selon la revendication 1, **caractérisé en ce que** ladite pièce mécanique est une aube creuse de turbomachine, en particulier une aube de rotor de soufflante, et **en ce que** ledit empilement comporte trois pièces primaires (12a', 12b', 12e') composées d'une pièce primaire d'extrados, d'une tôle centrale et d'une pièce primaire d'intrados.

3. Ensemble (10 ; 10') selon l'une quelconque des revendications précédentes, **caractérisé en ce que** ledit réservoir (14) est réalisé dans un alliage métallique à base nickel ou à base cobalt.

4. Ensemble (10 ; 10') selon l'une quelconque des revendications précédentes, **caractérisé en ce que** ledit volume du réservoir (14) est compris entre 10 et 100 fois le volume de ladite cavité (12c ;12c',12f') de l'empilement (12 ;12').

5. Ensemble (10 ; 10') selon l'une quelconque des revendications précédentes, **caractérisé en ce que** ledit réservoir (14) est placé sous un vide partiel compris entre 0,01 et 0,1 Pa, de préférence entre 0,03 et 0, 07 Pa.

6. Utilisation d'un ensemble (10 ; 10') selon l'une quelconque des revendications précédentes, pour l'évacuation des résidus gazeux présents dans une cavité (12c ;12c',12f') séparant au moins deux pièces primaires (12a, 12b ; 12a', 12b', 12e') destinées à être reliées par soudage-diffusion en vue de l'obtention, après formage superplastique, d'une pièce mécanique creuse .

7. Procédé de fabrication d'une pièce mécanique creuse par soudage-diffusion et formage superplastique, comprenant les étapes suivantes :
a) fourniture d'au moins deux pièces primaires (12a, 12b ; 12a', 12b', 12e') ;
b) dépôt suivant un motif prédéfini d'un produit anti-diffusion sur au moins une face parmi chaque paire de faces desdites pièces primaires, destinées à venir en regard l'une de l'autre ;
c) fourniture d'un réservoir étanche (14) présentant une extrémité ouverte (14a), étant réalisé de manière à être indéformable à la température et à la pression de soudage diffusion du matériau desdites pièces primaires (12a, 12b ; 12a', 12b', 12e') ;
d) assemblage des pièces primaires (12a, 12b ; 12a', 12b', 12e') à leur périphérie à l'exception d'un emplacement formant un passage (12d ;12d'), lesdites pièces primaires formant un empilement (12 ;12') en délimitant entre elles deux à deux une cavité (12c ;12c',12f') en communication avec ledit passage (12d ;12d') ;
e) placement de l'empilement (12 ;12') et du réservoir (14) dans une enceinte avec mise sous vide partiel de l'enceinte, ce par quoi le volume interne du réservoir (14) est mis sous vide partiel ;
f) raccordement étanche entre ladite extrémité ouverte (14a) du réservoir (14) et ledit passage (12d ;12d') dudit empilement (12 ;12') dans ladite enceinte sous vide partiel, afin de former un ensemble (10 ; 10') permettant une communication entre ledit espace interne dudit réservoir (14) et ladite cavité (12c ;12c',12f');
g) chauffage de l'enceinte à la température de dégradation thermique dudit liant, ce qui permet aux gaz issus de la dégradation du liant d'être aspirés dans le réservoir (14) ;
h) chauffage de l'enceinte à la température de soudage-diffusion et mise sous pression de l'enceinte à la pression de soudage-diffusion, ce qui entraîne le soudage-diffusion de l'empilement (12 ;12') en pression isostatique ;
i) séparation entre le réservoir (14) et l'empilement soudé (12 ;12');
j) placement dudit empilement soudé (12 ;12') dans un moule ;
k) mise à la température de formage superplastique dudit moule et injection sous la pression de formage superplastique d'un gaz inerte par ledit passage dans ladite cavité, ce qui entraîne le gonflement de l'empilement et le formage superplastique permettant l'obtention d'une ébauche de la pièce mécanique.

8. Procédé de fabrication selon la revendication 7, **caractérisé en ce que** lesdites étapes d) d'assemblage des pièces primaires et f) de raccordement étanche sont effectuées par soudage par faisceau d'électrons.

9. Procédé de fabrication selon l'une quelconque des revendications 7 et 8, **caractérisé en ce que** ledit vide partiel est compris entre 0,01 et 0,1 Pa, de préférence entre 0,03 et 0, 07 Pa.

10. Procédé de fabrication selon l'une quelconque des revendications 7 à 9, **caractérisé en ce que** ladite pièce mécanique est une aube creuse de turbomachine, en particulier une aube de rotor de soufflante, et **en ce que** ledit empilement comporte trois pièces primaires (12a', 12b', 12e') composées d'une pièce primaire d'extrados, d'une tôle centrale et d'une pièce primaire d'intrados.

## Claims

1. Assembly (10; 10') allowing the manufacture of a hollow mechanical part by diffusion bonding and superplastic forming, comprising:
- a stack (12; 12') of at least two primary parts (12a, 12b; 12a', 12b', 12e'), the said primary parts (12a, 12b; 12a', 12b', 12e') being joined together around their periphery with the exception of a place forming a passage (12d; 12d') so as to define between them, when paired, a cavity (12c; 12c', 12f), and the said primary parts (12a, 12b; 12a', 12b', 12e') having, facing the said cavity (12c; 12c', 12f), at least one face that is covered, in a pattern, with a stop-off product (16) containing a binder that can be thermally degraded, the assembly being **characterised by**:
- a sealed reservoir (14) having an internal space (14b) and an open end (14a), the said end (14a) being joined in a sealed manner to the said passage (12d; 12d') in the said stack (12; 12') so as to allow communication between the said internal space (14b) of the said reservoir (14) and the said cavity (12c; 12c', 12f) , the reservoir (14) being placed under a partial vacuum, this being produced so as to be non-deformable at the temperature and at the pressure at which the diffusion bonding of the said stack (12; 12') takes place and having a volume such that, when the said assembly (10; 10') is at the thermal degradation temperature of the said binder, the gases resulting from the degradation of the binder are sucked up into the reservoir (14).

2. Assembly (10') according to Claim 1, **characterised in that** the said mechanical part is a hollow turbomachine blade, in particular a fan rotor blade, and **in that** the said stack comprises three primary parts (12a', 12b', 12e') composed of a suction side primary part, a central plate and a pressure side primary part.

3. Assembly (10; 10') according to any one of the preceding claims, **characterised in that** the said reservoir (14) is made from a nickel-based or cobalt-based metal alloy.

4. Assembly (10; 10') according to any one of the preceding claims, **characterised in that** the said volume of the reservoir (14) is between 10 and 100 times the volume of the said cavity (12c; 12c', 12f) in the stack (12; 12').

5. Assembly (10; 10') according to any one of the preceding claims, **characterised in that** the said reservoir (14) is placed under a partial vacuum of between 0.01 and 0.1 Pa, preferably between 0.03 and 0.07 Pa.

6. Use of an assembly (10; 10') according to any one of the preceding claims, for extracting the gaseous residues present in a cavity (12c; 12c', 12f) that separates at least two primary parts (12a, 12b; 12a', 12b', 12e') intended to be joined together by diffusion bonding for the purpose of obtaining, after superplastic forming, a hollow mechanical part.

7. Process for manufacturing a hollow mechanical part by diffusion bonding and superplastic forming, comprising the following steps:
a) at least two primary parts (12a, 12b; 12a', 12b', 12e') are provided;
b) a stop-off product is deposited in a predefined pattern on at least one face among each pair of those faces of the said primary parts that are intended to face each other;
c) a sealed reservoir (14) having an open end (14a) is provided, the said reservoir being produced so as to be non-deformable at the temperature and pressure at which the material of the said primary parts (12a, 12b; 12a', 12b', 12e') undergoes diffusion bonding;
d) the primary parts (12a, 12b ; 12a', 12b', 12e') are joined together around their periphery with the exception of a place forming a passage (12d; 12d'), the said primary parts forming a stack (12; 12') and defining between them, when paired, a cavity (12c; 12c', 12f) that communicates with the said passage (12d; 12d') ;
e) the stack (12; 12') and the reservoir (14) are placed in a chamber under a partial vacuum of the chamber, thereby the internal volume of the reservoir (14) is placed under a partial vacuum;
f) a sealed joint is made between the said open end (14a) of the reservoir (14) and the said passage (12d; 12d') of the said stack (12; 12') in the said chamber under partial vacuum, so as to form an assembly (10; 10') allowing communication between the said internal space of the said reservoir (14) and the said cavity (12c; 12c', 12f);
g) the chamber is heated to the thermal degradation temperature of the said binder, thereby allowing the gases resulting from the degradation of the binder to be sucked into the reservoir (14);
h) the chamber is heated to the diffusion bonding temperature and pressurized to the diffusion bonding pressure, which causes the stack (12; 12') to undergo hot isostatic pressing diffusion bonding;
i) the reservoir (14) is separated from the bonded stack (12; 12');
j) the said bonded stack (12; 12') is placed in a mould; and
k) the said mould is brought to the superplastic forming temperature and an inert gas is injected under the superplastic forming pressure via the said passage in the said cavity, whereby the stack undergoes inflation and superplastic forming, allowing a blank of the mechanical part to be obtained.

8. Manufacturing process according to Claim 7, **characterised in that** the said step d) for joining the primary parts and the said step f) for making the sealed joint are carried out by electron beam welding.

9. Manufacturing process according to either of Claims 7 and 8, **characterised in that** the said partial vacuum is between 0.01 and 0.1 Pa, preferably between 0.03 and 0.07 Pa.

10. Manufacturing process according to any one of Claims 7 to 9, **characterised in that** the said mechanical part is a hollow turbomachine blade, in particular a fan rotor blade, and **in that** the said stack comprises three primary parts (12a', 12b', 12e') that are made up of a suction side primary part, a central plate and a pressure side primary part.

## Patentansprüche

1. Vorrichtung (10; 10') zur Herstellung eines hohlen mechanischen Werkstücks durch Diffusionsschweißen und superplastisches Formen, die einen Stapel (12; 12') von mindestens zwei Primärteilen (12a, 12b; 12a', 12b', 12e') umfasst, wobei diese Primärteile (12a, 12b; 12a', 12b', 12e') an ihrer Außenlinie mit Ausnahme einer Stelle zusammengefügt werden, die einen Durchlass (12d; 12d') bildet, so dass zwischen ihnen paarweise jeweils ein Hohlraum (12c; 12c', 12f') entsteht, und wobei diese Primärteile (12a, 12b; 12a', 12b', 12e') mindestens eine Seite gegenüber diesem Hohlraum (12c; 12c', 12f') aufweisen, die nach einem Muster mit einem diffusionsfesten Produkt (16) beschichtet ist, welches ein Bindemittel enthält, das thermisch abgebaut werden kann,
**gekennzeichnet durch** einen dichten Behälter (14) mit einem Innenraum (14b) und einem offenen Ende (14a), wobei das Ende (14a) unter Dichtigkeit an diesen Durchlass (12d; 12d') dieses Stapels (12; 12') angeschlossen ist, um eine Verbindung zwischen diesem Innenraum (14b) dieses Behälters (14) und diesem Hohlraum (12c; 12c', 12f') zu ermöglichen, wobei der Behälter (14) unter Teilvakuum gesetzt ist, dergestalt ausgeführt ist, dass er sich unter der Temperatur und dem Druck des Diffusionsschweißens dieses Stapels (12; 12') nicht verformen kann, und ein Volumen dergestalt aufweist, dass, wenn diese Vorrichtung (10; 10') der Temperatur des thermischen Abbaus dieses Bindemittels ausgesetzt wird, die beim Abbau des Bindemittels entstehenden Gase in den Behälter (14) gesaugt werden.

2. Vorrichtung (10') nach Anspruch 1,
**dadurch gekennzeichnet,**
**dass** dieses mechanische Werkstück eine hohle Turbotriebwerksschaufel ist, insbesondere eine Gebläserotorschaufel, und dass der genannte Stapel drei Primärteile (12a', 12b', 12e') umfasst, die sich aus einem Saugseiten-Primärteil, einem Mittelblech und einem Druckseiten-Primärteil zusammensetzen.

3. Vorrichtung (10; 10') nach einem der vorherigen Ansprüche,
**dadurch gekennzeichnet,**
**dass** dieser Behälter (14) aus einer Metalllegierung auf Nickel- oder Kobaltbasis ausgeführt ist.

4. Vorrichtung (10; 10') nach einem der vorherigen Ansprüche,
**dadurch gekennzeichnet,**
**dass** dieses Volumen des Behälters (14) zwischen dem 10-fachen und dem 100-fachen des Volumens dieses Hohlraums (12c; 12c', 12f') des Stapels (12; 12') beträgt.

5. Vorrichtung (10; 10') nach einem der vorherigen Ansprüche,
**dadurch gekennzeichnet,**
**dass** dieser Behälter (14) unter ein Teilvakuum gesetzt ist, das zwischen 0,01 und 0,1 Pa, vorzugsweise zwischen 0,03 und 0,07 Pa beträgt.

6. Verwendung einer Vorrichtung (10; 10') nach einem der vorherigen Ansprüche zur Beseitigung von Gasresten, die sich in einem Hohlraum (12c; 12c', 12f') befinden, der mindestens zwei Primärteile (12a, 12b; 12a', 12b', 12e') voneinander trennt, die dazu vorgesehen sind, durch Diffusionsschweißen miteinander verbunden zu werden, um nach dem superplastischen Formen ein hohles mechanisches Werkstück zu erhalten.

7. Verfahren zur Herstellung eines hohlen mechanischen Werkstücks durch Diffusionsschweißen und superplastisches Formen, das die folgenden Verfahrensschritte umfasst:
a) Bereitstellen von mindestens zwei Primärteilen (12a, 12b; 12a', 12b', 12e'),
b) Auftragen eines diffusionsfesten Produkts auf mindestens eine Seite von jeweils zwei Seiten dieser Primärteile, die vorgesehen sind, einander gegenüber zu liegen, nach einem vorbestimmten Muster,
c) Bereitstellen eines dichten Behälters (14) mit einem offenen Ende (14a), der dergestalt ausgeführt ist, dass er sich bei der Temperatur und dem Druck des Diffusionsschweißens des Werkstoffs dieser Primärteile (12a, 12b; 12a', 12b', 12e') nicht verformen lässt,
d) Zusammenfügen der Primärteile (12a, 12b; 12a', 12b', 12e') an ihrer Außenlinie mit Ausnahme einer Stelle, die einen Durchlass (12d; 12d') bildet, wobei diese Primärteile einen Stapel (12; 12') bilden und dabei zwischen sich einen Hohlraum (12c; 12c', 12f') umgrenzen, der mit dem Durchlass (12d; 12d') in Verbindung steht,
e) Einbringen des Stapels (12; 12') und des Behälters (14) in einen abgeschlossenen Raum und in diesem Raum Teilvakuum herstellen, wodurch das Innenvolumen des Behälters (14) unter Teilvakuum gesetzt wird,
f) Herstellen einer dichten Verbindung zwischen diesem offenen Ende (14a) des Behälters (14) und diesem Durchlass (12d; 12d') des Stapels (12; 12') innerhalb dieses unter Teilvakuum gesetzten abgeschlossenen Raums, um eine Vorrichtung (10; 10') zu bilden, die eine Verbindung zwischen diesem Innenraum dieses Behälters (14) und diesem Hohlraum (12c; 12c', 12f') ermöglicht,
g) Erwärmen des abgeschlossenen Raums auf die Temperatur des thermischen Abbaus des genannten Bindemittels, wodurch die beim Abbau des Bindemittels entstehenden Gase in den Behälter (14) gesaugt werden können,
h) Erwärmen des abgeschlossenen Raums auf die Temperatur des Diffusionsschweißens und Unter-Druck-Setzen des abgeschlossenen Raums auf den Druck des Diffusionsschweißens, wodurch das Diffusionsschweißen des Stapels (12; 12') unter isostatischem Druck bewirkt wird,
i) Trennen zwischen dem Behälter (14) und dem geschweißten Stapel (12; 12'),
j) Einbringen dieses geschweißten Stapels (12; 12') in eine Form,
k) Erwärmen dieser Form auf die Temperatur des superplastischen Formens und Einspritzen eines trägen Gases unter dem Druck des superplastischen Formens durch den genannten Durchlass in den genannten Hohlraum, was das Aufblasen des Stapels und das superplastische Formen bewirkt, durch das ein Rohteil des mechanischen Werkstücks erzielt werden kann.

8. Herstellungsverfahren nach Anspruch 7,
**dadurch gekennzeichnet,**
**dass** die Verfahrensschritte d) Zusammenfügen der Primärteile und f) Herstellen einer dichten Verbindung durch Elektronenstrahlschweißen erfolgen.

9. Herstellungsverfahren nach einem der Ansprüche 7 und 8,
**dadurch gekennzeichnet,**
**dass** das genannte Teilvakuum zwischen 0,01 und 0,1 Pa, vorzugsweise zwischen 0,03 und 0,07 Pa beträgt.

10. Herstellungsverfahren nach einem der Ansprüche 7 bis 9,
**dadurch gekennzeichnet,**
**dass** das genannte mechanische Werkstück eine hohle Turbotriebwerkssehaufel ist, insbesondere eine Gebläserotorschaufel, und dass der genannte Stapel drei Primärteile (12a', 12b', 12e') umfasst, die sich aus einem Saugseiten-Primärteil, einem Mittelblech und einem Druckseiten-Primärteil zusammensetzen.
